# FASCICULE DE BREVET EUROPEEN

(11) **EP 4 139 646 B1**
(45) Date de publication et mention de la délivrance du brevet: **04.06.2025**
(21) Numéro de dépôt: 21725563.7
(22) Date de dépôt: 13.04.2021
(51) Int. Cl.: G01L 5/24, G01M 15/14, B64F 5/60

(54) **PROCÉDÉ ET DISPOSITIF DE CONTRÔLE DE LA TENSION DE SERRAGE D'UN BOULON DE FIXATION DE PIECES AÉRONAUTIQUES**
VERFAHREN UND VORRICHTUNG ZUR ÜBERPRÜFUNG DER ANZUGSSPANNUNG EINES BEFESTIGUNGSBOLZENS ZUR BEFESTIGUNG VON AERONAUTISCHEN TEILEN
METHOD AND DEVICE FOR CHECKING THE TIGHTENING TENSION OF A FASTENING BOLT FOR FASTENING AERONAUTICAL PARTS

(30) Priorité: 20.04.2020 FR 2003931
(43) Date de publication de la demande: 01.03.2023
(73) Titulaire: SAFRAN AIRCRAFT ENGINES, 75015 Paris (FR)
(72) Inventeur: DELAPORTE, Nicolas Daniel, 77550 Moissy-Cramayel (FR); HOUSSAYE, Adeline Isabelle Anne-Marie, 77550 Moissy-Cramayel (FR); MARTINE, Arnaud, 77550 Moissy-Cramayel (FR)
(74) Mandataire: Gevers & Orès
(86) Numéro de dépôt international: PCT/FR2021/050651
(87) Numéro de publication internationale: WO 2021/214401

(56) Documents cités:
- EP-A1- 0 467 262
- WO-A1-95/22009
- DE-A1- 102015 111 826
- FR-A1- 3 056 746
- US-A- 3 242 725
- US-A- 5 699 703
- US-A1- 2016 229 037

## Description

### Domaine technique de l'invention

La présente invention concerne un procédé de contrôle de la tension de serrage d'un boulon de fixation ainsi qu'un dispositif permettant ce contrôle, en particulier pour l'industrie aéronautique.

### Arrière-plan technique

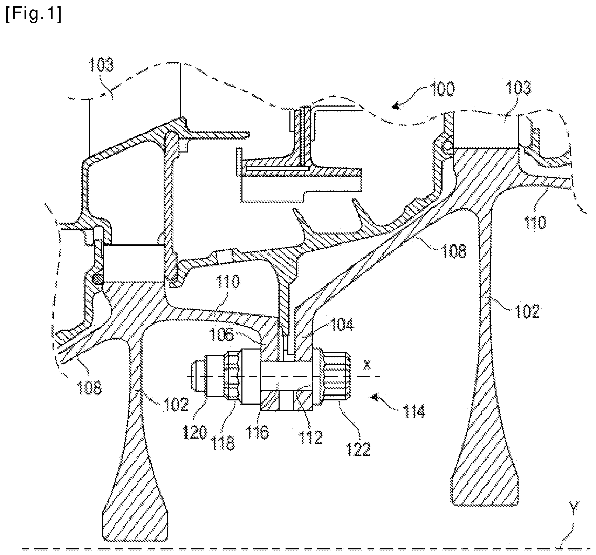

L'état de la technique comprend les documents DE-A1-2015111826, WO-A1-95/22009, FR-A1-3056746 et US-A-5699703. Il est bien connu de la technique, notamment explicitée dans le document FR-A1-3 019 584, que dans l'industrie aéronautique, une turbomachine d'aéronef est composée de plusieurs parties ou modules et en particulier d'une turbine, basse ou haute pression, comportant elle-même un ou plusieurs étages, chacun étant constitué d'une rangée d'aubes de stator suivie d'une rangée d'aubes de rotor. Une portion de turbine 100 est représentée en exemple sur la figure 1.

Le rotor comprend en général plusieurs disques 102, centrés sur un axe de rotation Y et portant des aubes 103, qui sont fixés les uns aux autres par des brides 104, 106 qui peuvent être placées en amont et/ou en aval des disques 102. Par exemple, chaque disque 102 est relié par une paroi tronconique amont 108 à une bride 104 et par une paroi tronconique aval 110 à une bride 106. Les brides 104, 106 s'étendent radialement par rapport à l'axe Y de la turbine 100.

Pour fixer deux disques 102 entre eux, les brides de ces disques sont appliquées axialement les unes sur les autres et comprennent des orifices 112 alignés destinés au montage de boulons 114 qui assurent la fixation des brides en les serrant axialement les unes contre les autres.

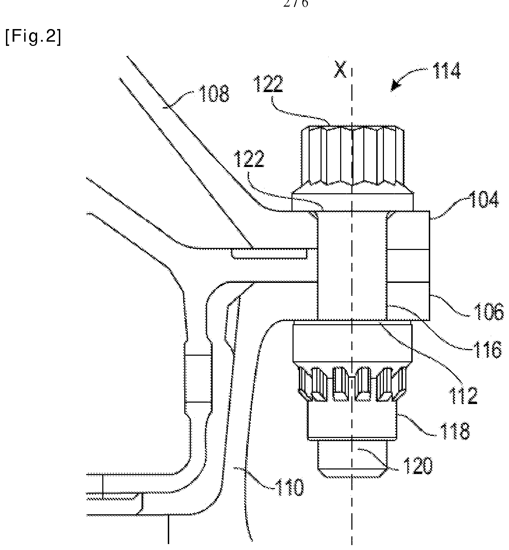

Dans la présente demande, on entend par boulon 114, un ensemble comportant une vis 116 et un écrou 118, aligné selon un axe X, parallèle à l'axe Y de rotation de la turbine. La figure 2 montre en détail un exemple de réalisation d'un tel ensemble.

De manière classique, une vis 116 comprend une tige filetée 120 dont une extrémité est reliée à une tête 122. La tige filetée 120 de la vis 118 est destinée à traverser les orifices 112 des brides jusqu'à ce que la tête 122 prennent appui axialement sur une des brides. L'écrou 118 est vissé sur l'extrémité libre de la tige filetée 120 jusqu'à prendre appui sur la bride opposée à la tête 122.

Dans l'industrie aéronautique, le serrage d'un écrou ou d'un boulon doit être réalisé à un couple prédéterminé pour garantir le serrage des brides et éviter leur désolidarisation accidentelle en fonctionnement. Un défaut de serrage serait problématique car il pourrait entraîner un disfonctionnement de la turbomachine et ainsi conduire à une défaillance de l'aéronef qui en serait équipé.

Pour éviter qu'un tel disfonctionnement ne survienne, chaque boulon est serré à un couple souhaité et prédéterminé par calcul lors de la mise au point de l'ensemble mécanique. Le couple de serrage est déterminé à partir de la tension dans la vis du boulon. Le serrage est alors généralement réalisé avec précision au moyen d'une clef dynamométrique au couple souhaité lors de la production.

Il est donc important de réaliser avec soin le contrôle d'un serrage, et en particulier le contrôle de la tension des vis. De manière générale, un serrage par vissage génère des contraintes normales et en cisaillement par rapport au plan de serrage. La tension de serrage d'une vis correspond à cette contrainte normale et doit être inférieure à un seuil prédéterminé.

Dans l'état de la technique, ce contrôle est réalisé par un procédé manuel difficilement reproductible et donc peu fiable. Un des procédés utilisés consiste à utiliser un capteur de mesure pour mesurer la tension de la vis du boulon après serrage.

Cependant, la position du capteur sur le boulon est importante pour obtenir une mesure fiable et fidèle à la réalité de la tension de serrage et cette position n'est pas garantie dans l'état de la technique car le capteur utilisé n'est pas forcément adapté à cette mesure sur un boulon. La technique actuelle ne permet donc pas d'obtenir des résultats exploitables. Cette difficulté peut être amplifiée lorsque l'accès au boulon est complexe avec le capteur du fait de l'environnement rendant difficile la manipulation d'un capteur dans cette zone. Il est alors difficile pour un opérateur d'effectuer de manière répétée et fiable ce contrôle.

### Résumé de l'invention

La présente invention a pour but de remédier à ces inconvénients et concerne un procédé de contrôle et un dispositif de centrage permettant sa mise en œuvre, qui sont simples et efficaces.

L'invention propose ainsi un procédé de contrôle de la tension de serrage d'au moins un boulon de fixation d'au moins deux pièces aéronautiques, selon la revendication 1 et comprenant les étapes consistant à :
a) monter un dispositif de centrage sur une tête d'une vis du boulon, ce dispositif de centrage comportant un premier orifice aligné sur un axe de la vis ;
b) engager une extrémité d'un capteur dans l'orifice du dispositif jusqu'à ce que cette extrémité soit au contact de la tête de la vis ;
c) contrôler au moins un paramètre physique du boulon par l'intermédiaire dudit capteur, ce paramètre étant représentatif de la tension de serrage du boulon ; puis
d) retirer le dispositif de centrage,
le procédé comprenant, entre les étapes de montage du dispositif et d'engagement du capteur, une étape d'application d'un liquide de couplage sur la tête de la vis, caractérisé en ce qu'un excès de liquide de couplage est évacué par un second orifice du dispositif lors de l'étape d'engagement du capteur, ledit second orifice étant transversal et débouchant dans ledit premier orifice.

Ainsi, grâce à l'invention, on s'assure de faciliter le contrôle d'un boulon par un opérateur. En effet, le capteur est maintenu en position par rapport à la vis par le dispositif, ce qui permet à l'opérateur d'éviter de mal positionner le capteur vis-à-vis du boulon ou de le faire glisser sur le boulon à contrôler. En outre, le dispositif utilisé permet d'avoir des conditions d'essais plus constantes et uniformes, ce qui assure une fiabilité et une répétabilité accrue du contrôle de la tension de serrage.

Le procédé selon l'invention peut comprendre une ou plusieurs des caractéristiques suivantes, prises isolément les unes des autres ou en combinaison les unes avec les autres :
- le capteur est un transducteur à ultrasons ;
- à l'étape d'engagement du capteur, l'extrémité du capteur est appliquée avec une pression prédéterminée sur la tête de vis, par exemple par l'intermédiaire d'au moins un organe élastique fixé au dispositif et prenant appui sur le capteur ;
- les pièces sont des disques de rotor d'une turbomachine d'aéronef, ces disques comportant des brides annulaires appliquées les unes sur les autres et comportant des orifices alignés de montage de boulons qui sont contrôlés les uns après les autres ; et
- le paramètre physique est une contrainte ou déformation mécanique.

La présente invention concerne également un dispositif de centrage selon la revendication 5 et permettant la mise en œuvre d'un procédé de contrôle tel que décrit ci-dessus, caractérisé en ce qu'il comprend un corps comportant un logement configuré pour recevoir une tête d'une vis d'un boulon, ce logement s'étendant le long d'un axe et comportant un prolongement axial formant un orifice configuré pour recevoir une extrémité d'un capteur pour le contrôlé de la tension de serrage de ce boulon, le corps comprenant un orifice transversal débouchant dans le logement et configuré pour laisser passer un excès de liquide de couplage lors d'un contrôle.

Le dispositif de centrage selon l'invention peut comprendre une ou plusieurs des caractéristiques suivantes, prise isolément les unes des autres ou en combinaison les unes avec les autres :
- le corps est formé d'une seule pièce, de préférence en matériau élastiquement déformable ;
- le corps a une forme annulaire ou cylindrique, l'axe étant confondu avec un axe de révolution du corps ;
- le corps a une forme générale allongée et comprend le logement sensiblement en son milieu ;
- le corps comporte à ses extrémités longitudinales :
   - des crochets de fixation d'un organe élastique configuré pour prendre appui sur le capteur, et/ou
   - des doigts parallèles de positionnement destinés à coopérer avec les pièces fixées par le boulon ;
- les crochets sont situés sur une première face plane du corps et les doigts sont situés sur une seconde face plane opposée du corps.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] la figure 1 est une demi vue schématique en coupe d'une portion de turbine d'une turbomachine d'aéronef ;
[Fig. 2] la figure 2 est une vue schématique en coupe d'un boulon de fixation ;
[Fig. 3] la figure 3 est une vue schématique en perspective d'un boulon de fixation surmonté d'un dispositif de centrage pour la mise en œuvre du procédé de contrôle de la tension de serrage, selon un premier mode de réalisation ;
[Fig. 4A] la figure 4A est une vue schématique en coupe du dispositif et du boulon de la figure 3 ;
[Fig. 4B] la figure 4B est une vue similaire à celle de la figure 4A et montre une étape d'un procédé de contrôle lors de laquelle un capteur est introduit dans le dispositif de centrage ;
[Fig. 5] la figure 5 est une vue en perspective d'un boulon de fixation surmonté d'un dispositif de centrage pour la mise en œuvre du procédé de contrôle de la tension de serrage, selon un deuxième mode de réalisation ;
[Fig. 6] la figure 6 est une vue schématique en coupe du boulon et du dispositif de la figure 5, et illustre en outre une étape d'un procédé de contrôle lors de laquelle un capteur est introduit dans le dispositif de centrage ; et
[Fig. 7] la figure 7 est un schéma-blocs illustrant des étapes d'un mode de réalisation du procédé de contrôle de la tension de serrage.

### Description détaillée de l'invention

Dans la description qui va suivre, on apporte la précision que le procédé de contrôle de la tension de serrage d'un boulon et l'utilisation du dispositif le permettant doivent s'effectuer sur un module de turbomachine, et par exemple de turbine, positionné à plat. Autrement dit, le module est basculé de sorte que l'axe Y de rotation du rotor se trouve à la verticale.

Bien que l'exemple décrit concerne une turbine, il est clair que cet exemple n'est pas limitatif et donc que le procédé et le dispositif de contrôle est applicable à d'autres environnements ou modules de la turbomachine, tels que dans un compresseur par exemple.

Les figures 1 et 2 ont été décrites dans ce qui précède.

La demanderesse a mis au point un dispositif de centrage qui permet de centrer un capteur pour réaliser un contrôle de tension de serrage d'un boulon de fixation décrit précédemment.

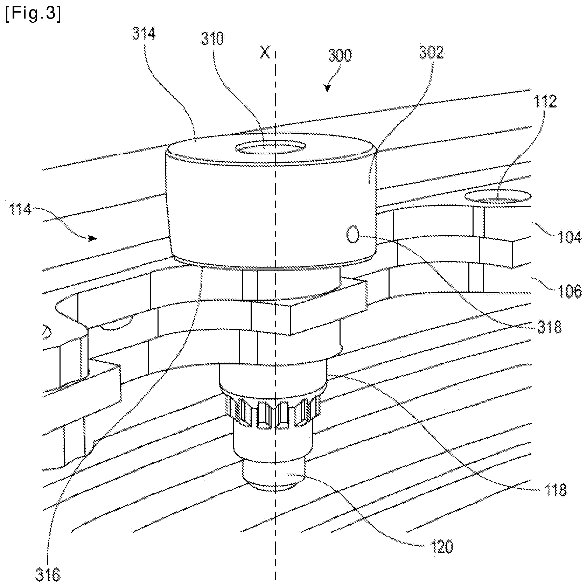

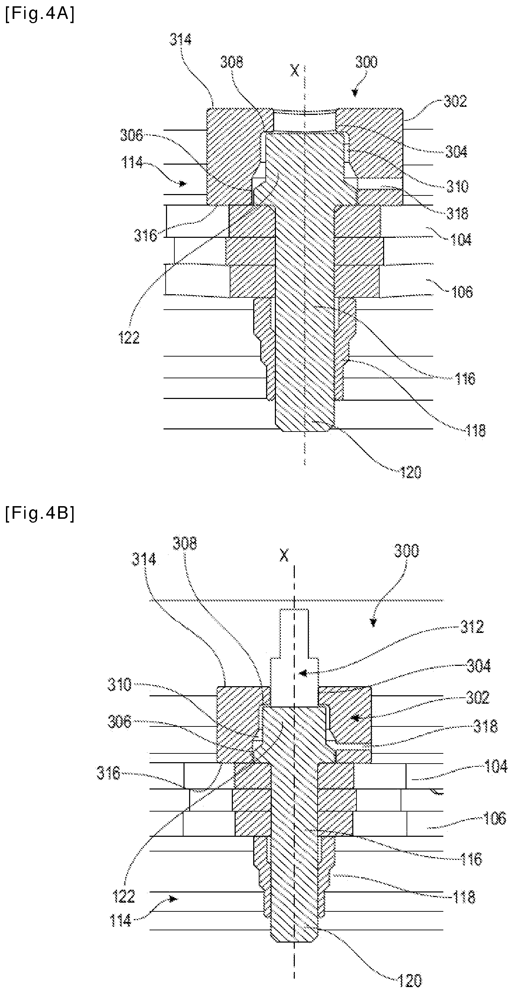

On se réfère à présent aux figures 3, 4A et 4B qui montrent une première forme de réalisation du dispositif 300 de centrage emmanché sur la tête 122 de la vis 116 du boulon de fixation 114. Les éléments des figures 3, 4A et 4B qui ont déjà été décrits en référence aux figures 1 et 2, sont désignés par les mêmes références.

Dans ce mode de réalisation, le corps 302 du dispositif 300 est monobloc. Le corps 302, réutilisable, est par exemple en un matériau élastiquement déformable comme un élastomère ou un caoutchouc.

Le corps 302 présente une partie évidée, s'étendant le long d'un axe X et ayant une forme générale cylindrique et étagée, qui est ouverte à ses deux extrémités. Cette partie évidée comprend différentes portions : une portion proximale ou supérieure 304 et une portion distale ou inférieure 306. La portion proximale 304 a un diamètre sensiblement inférieur au diamètre de la portion distale 306. La jonction des portions proximale 304 et distale 306 forme un épaulement 308 qui prend appui sur la tête de vis 122 une fois le dispositif 300 monté sur le boulon 114.

La partie évidée du corps définit un logement 310 configuré pour recevoir la tête de vis 122 du boulon 114 dans sa portion distale 306 et pour recevoir une extrémité d'un capteur 312 pour contrôler la tension de serrage du boulon 114 dans sa portion proximale 304. Le logement 310, tel que conformé, permet d'emmancher le dispositif 300 sur la tête de vis 122 et de le maintenir dessus de telle sorte que le dispositif 300 soit solidaire de la tête de vis 122. On comprend donc que, pour une fixation facile sur le boulon 114, le diamètre de la portion distale 306 est sensiblement supérieur ou égal au diamètre maximum de la tête de vis 122. De la même manière, le diamètre de la portion proximale 304 est sensiblement supérieur ou égal au diamètre de l'extrémité du capteur 312.

Dans une variante, le diamètre de la portion distale 306 peut être légèrement inférieur au diamètre de la tête 122. On comprend alors que les parois de la portion distale 306 peuvent se déformer élastiquement pour maintenir serrée la tête de vis 122.

Le dispositif 300 est destiné à être monté et retiré manuellement par un utilisateur.

Dans une variante encore, le diamètre de la portion proximale 304 peut être légèrement inférieur au diamètre de l'extrémité du capteur 312. On comprend alors que les parois de la portion proximale 304 peuvent se déformer élastiquement pour maintenir serrée l'extrémité du capteur 312.

Le capteur 312 est destiné à être engagé dans le dispositif et retiré manuellement par un utilisateur.

En outre, la déformation du corps 302 permet d'adapter le dispositif 300 à des têtes de vis de différents types et permet également d'adapter la pose du dispositif 300 à l'environnement dans lequel se trouve le boulon 114, notamment dans le cas où le boulon 114 est proche d'une pièce avec un encombrement spatial important. Dans un tel cas, le corps 302 peut se déformer élastiquement pour s'adapter à son environnement immédiat.

Le corps 302 comprend également une face supérieure 314 et une face inférieure 316, la face supérieure 314 étant du côté de la portion proximale 304 et la face inférieure 316 du côté de la portion distale 306. La face inférieure 316 peut entrer en contact avec la surface de la bride 104.

Un orifice 318 s'étendant le long d'un axe transversal, sensiblement perpendiculaire à l'axe du logement 310, relie la partie évidée du corps à l'extérieur. Cet orifice 318 permet l'évacuation d'un surplus de liquide de couplage utilisé lors du contrôle de la tension de serrage. En effet, l'insertion du capteur 312 dans le logement 310 du corps 302 du dispositif 300 a tendance à comprimer le fluide situé entre le capteur 312 et la tête de la vis 122. Le surplus de fluide, non nécessaire au bon déroulé du contrôle de la tension de serrage, peut alors être évacué via l'orifice 318.

Dans l'industrie aéronautique, il est possible que les brides 104, 106 permettant l'assemblage des disques soient festonnées. Une bride festonnée, contrairement à une bride classique, comporte une alternance de parties pleines et de parties évidées, s'étendant radialement par rapport à l'axe Y de la turbine. Une bride 104, 106 festonnée permet notamment un gain de matière et, par conséquent, un gain sur la masse finale de la turbomachine. Dans un tel cas, la surface entourant l'orifice 112 destiné à recevoir le boulon 114 est réduite. Le support sur lequel s'appuie le dispositif 300 de centrage est donc également réduit, ce qui diminue la stabilité du dispositif.

Une deuxième forme de réalisation du dispositif permet de résoudre ce problème.

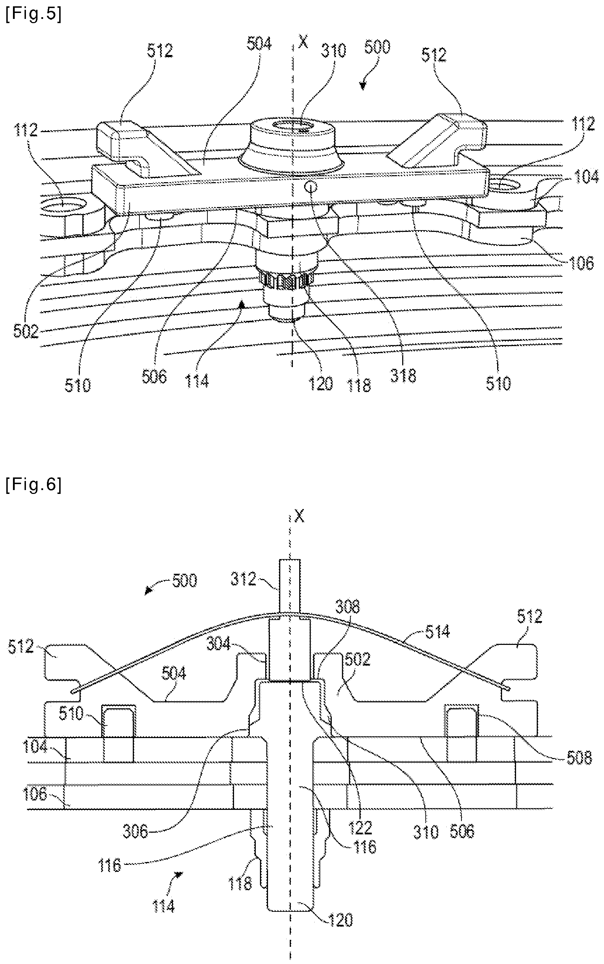

On se réfère à présent aux figures 5 et 6 qui montrent une deuxième forme de réalisation du dispositif 500 de centrage emmanché sur la tête 122 de la vis 116 d'un boulon de fixation 114. Les éléments des figures 5 et 6 qui ont déjà été décrits en référence aux figures précédentes sont désignés par les mêmes références.

Dans ce mode de réalisation, le corps 502 du dispositif 500 est monobloc et présente une forme générale allongée. Le corps 502 du dispositif 500 peut être en un matériau élastiquement déformable comme un élastomère ou un caoutchouc. Le dispositif 500 est également réutilisable.

La forme allongée du dispositif 500 permet d'améliorer sa stabilité lorsque celui-ci est utilisé sur une bride festonnée. En effet, les extrémités du corps 502 peuvent alors prendre appui sur les bords des orifices 112 adjacents au boulon 114 d'intérêt.

Le corps 502 comprend en outre une première face plane supérieure 504 et une seconde face plane inférieure 506, opposée à la première face plane 504. Il comporte, sensiblement en son milieu, une partie évidée ayant les mêmes caractéristiques que la partie évidée décrite précédemment pour le premier mode de réalisation des figures 3, 4A et 4B permettant en outre d'emmancher le dispositif 500 sur la tête de vis 122 d'un boulon 114. Cette partie évidée définit donc le logement 310.

Le corps 502 comporte également un orifice 318 d'évacuation d'un surplus de liquide comme décrit précédemment.

Le corps 502 comporte des évidements 508 situés sensiblement aux extrémités du corps 502 sur la face inférieure 506. Ces évidements 508 sont configurés pour recevoir des doigts 510 de positionnement de sorte qu'une extrémité de chaque doigt 510 se trouve en saillie de la face inférieure 506.

Ces doigts 510 de positionnement sont configurés pour coopérer avec les brides festonnées et plus particulièrement pour que les extrémités en saillie coopèrent avec les bords latéraux des parties évidées de la bride festonnée 104, 106. De la sorte, la rotation du dispositif 502 de centrage est limitée et sa stabilité améliorée.

Les doigts 510 de positionnement sont en outre amovibles. Cela présente l'avantage de permettre une utilisation du dispositif 502 dans le cas où les brides 104, 106 sont festonnées ou non.

Dans une variante, les doigts 510 et le corps 502 peuvent être monobloc.

Le corps 502 comporte en outre des crochets 512 de fixation sensiblement situés à ses extrémités longitudinales sur la face supérieure 504. Ces crochets 512 permettent de fixer au moins un organe élastique 514, tel qu'un élastique, configuré pour prendre appui sur le capteur 312 une fois celui-ci introduit dans le logement du corps 502 (comme sur la figure 6).

L'organe élastique 514, dont la force de rappel est prédéterminée, est fixé sur les deux crochets 512 afin d'être tendu. En utilisation, l'organe élastique 514 appuie sur le capteur 312 de sorte à appliquer une pression constante et uniforme tout au long de son utilisation afin que l'extrémité du capteur soit au contact de la tête de vis 122. L'organe élastique 514 est en outre amovible et interchangeable. Il peut donc être facilement remplacé en cas d'usure ou de rupture.

Cet organe élastique 514 présente donc l'avantage de se substituer à l'opérateur pour appliquer une pression sur le capteur 312 pendant le contrôle de la tension de serrage. Cette caractéristique est particulièrement utile lorsque l'encombrement au niveau du boulon 114 est trop important pour que l'opérateur puisse placer le capteur 312 et appuyer dessus. En outre, l'utilisation de l'organe élastique 514 assure une répétabilité accrue du contrôle de la tension de serrage.

La demanderesse a également mis au point un procédé de contrôle de la tension de serrage d'un boulon de fixation d'au moins deux brides de disques de rotor d'une turbomachine d'aéronef. Ce procédé permet de contrôler la tension de serrage de la vis du boulon.

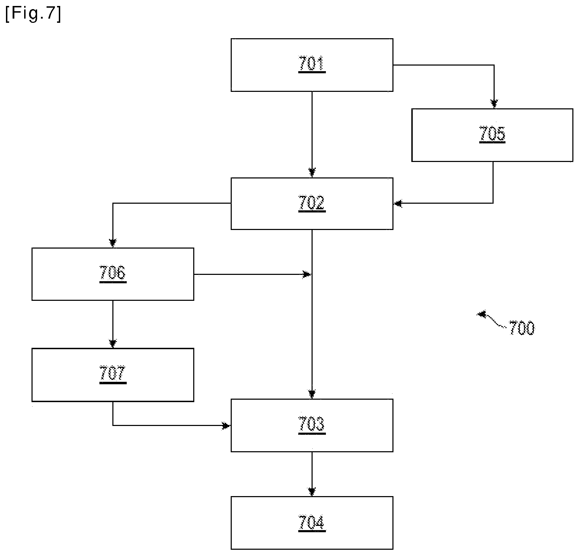

On se réfère à présent à la figure 7 montrant les étapes du procédé 700 mis en œuvre au moyen d'un dispositif 300, 500 de centrage comme décrit précédemment.

Au cours d'une étape 701, le dispositif 300, 500 de centrage est emmanché sur une tête de vis 122 de sorte à être solidaire avec un boulon 114.

Au cours d'une étape 702, l'extrémité d'un capteur 312 est introduite dans le logement 310 du corps 302, 502 du dispositif 300, 500 prévu à cet effet. L'extrémité du capteur 312 est introduite jusqu'à être au contact de la tête 122 de la vis 116 du boulon 114. Ce capteur 312 peut, entre autre, être un transducteur à ultrasons. Au cours d'une étape 703, au moins un paramètre physique du boulon 114 est contrôlé par le capteur 312. Ce paramètre physique peut donner directement une valeur de tension de serrage ou bien peut donner une grandeur représentative, permettant d'estimer la tension de serrage. Dans le cas d'un transducteur à ultrasons, des ultrasons sont émis à travers la vis 116 afin de déterminer la tension de serrage du boulon 114. La tension de serrage mesurée peut alors être comparée avec la tension de serrage souhaitée.

Plus précisément, une contrainte mécanique σ de la vis 116 est déterminée à partir de la déformation ε et du module de Young E ou module d'élasticité via la loi de Hooke (σ = E x ε). La déformation ε est obtenue à partir de mesures du temps d'un aller/retour d'une onde, avant serrage et après serrage du boulon 114. Le module de Young E est une constante associée au matériau de la vis 116.

Au cours d'une étape 704, le capteur 312 est désengagé du dispositif 300, 500 de centrage puis le dispositif 300, 500 est démonté du boulon 114.

À la fin de cet enchaînement d'étapes, le procédé 700 peut être reproduit avec le même dispositif 300, 500 de centrage sur un autre boulon 114. Le procédé 700 peut ainsi être réalisé pour répondre à un besoin ponctuel ou bien peut être réalisé en série, sur l'ensemble des turbomachines d'une ligne de production.

On notera que le procédé 700 peut être interrompu à tout moment pour conduire à l'étape 704. On notera également que les différentes étapes ne sont pas limitées dans le temps.

Des étapes additionnelles peuvent s'incrémenter aux étapes précédemment décrites afin d'améliorer le contrôle de la tension de serrage.

Ainsi, au cours d'une étape 705, s'insérant entre les étapes 701 et 702, un produit liquide ou liquide de couplage peut être versé dans le logement 310 du corps 302, 502 du dispositif 300, 500 de sorte à recouvrir la tête de vis 122. Ce liquide est utile pour assurer une transmission des ondes vers la vis 116.

Au cours d'une étape 706, s'insérant après l'étape 702, une pression constante et uniforme est exercée sur le capteur 312 pour le maintenir en place, d'une part, et, d'autre part, pour pouvoir récupérer par la suite des résultats exploitables et comparables obtenus à l'étape 703.

La pression sur le capteur 312 peut être exercée manuellement ou bien au moyen d'un organe élastique 514 prenant appui sur le capteur 312.

Il sera noté que la pression sur le capteur 312 doit rester constante et uniforme jusqu'à l'étape 704 de démontage du dispositif 300, 500.

Au cours d'une étape 707, s'insérant après l'étape 702 ou après l'étape 706, l'excès de liquide de couplage est évacué par un orifice 318 reliant le logement 310 configuré pour recevoir la tête de vis 122. L'évacuation du liquide est due à la compression du liquide entre la tête de vis 122 et l'extrémité du capteur 312. Le surplus de liquide est évacué, tout comme les bulles d'air, permettant l'obtention de résultats plus fiables.

Les modes de réalisation décrits précédemment présentent l'avantage d'améliorer le maintien d'un capteur au-dessus d'une tête de vis d'un boulon à contrôler. En effet, les solutions apportées permettent à un utilisateur d'effectuer de manière simple, fiable et répétable des opérations de contrôle de la tension de serrage d'un boulon de fixation de pièces aéronautiques.

Le dispositif mis en œuvre dans ces différents modes de réalisation permet en outre un gain de productivité. En effet, le dispositif décrit précédemment permet à l'utilisateur de gagner en précision lors du contrôle et/ou des mesures, et donc de supprimer des étapes supplémentaires de vérification en cas de doute sur la fiabilité d'une mesure.

## Revendications

1. Procédé de contrôle de la tension de serrage d'au moins un boulon de fixation (114) d'au moins deux pièces aéronautiques, comprenant les étapes consistant à :
a) monter un dispositif (300, 500) de centrage sur une tête (122) d'une vis (116) du boulon (114), ce dispositif de centrage comportant un premier orifice aligné sur un axe de la vis ;
b)engager une extrémité d'un capteur (312) dans l'orifice du dispositif (300,500) jusqu'à ce que cette extrémité soit au contact de la tête (122) de la vis (116) ;
c) contrôler au moins un paramètre physique du boulon (114) par l'intermédiaire dudit capteur (312), ce paramètre étant représentatif de la tension de serrage du boulon ; puis
d) retirer le dispositif (300, 500) de centrage,
le procédé comprenant, entre les étapes a) et b), une étape d'application d'un liquide de couplage sur la tête (122) de la vis (116), **caractérisé en ce qu'**un excès de liquide de couplage est évacué par un second orifice (318) du dispositif (300, 500) lors de l'étape b), ledit second second orifice étant transversal et débouchant dans ledit premier orifice.

2. Procédé selon la revendication 1, dans lequel le capteur (312) est un transducteur à ultrasons.

3. Procédé selon l'une des revendications précédentes, dans lequel, à l'étape b), l'extrémité du capteur (312) est appliquée avec une pression prédéterminée sur la tête (122) de la vis (116), par exemple par l'intermédiaire d'au moins un organe élastique (514) fixé au dispositif (500) et prenant appui sur ledit capteur (312).

4. Procédé selon l'une des revendications précédentes, dans lequel les pièces sont des disques (102) de rotor d'une turbomachine d'aéronef, ces disques comportant des brides (104, 106) annulaires appliquées les unes sur les autres et comportant des orifices (112) alignés de montage de boulons (114) qui sont contrôlés les uns après les autres.

5. Dispositif (300, 500) de centrage pour la mise en œuvre du procédé selon l'une des revendications précédentes, comprenant un corps (302, 502) comportant un logement (310) configuré pour recevoir une tête (122) d'une vis (116) d'un boulon (114), ce logement (310) s'étendant le long d'un axe et comportant un prolongement axial formant un orifice configuré pour recevoir une extrémité d'un capteur (312) pour le contrôle de la tension de serrage de ce boulon, **caractérisé en ce que** le corps (302, 502) comprenant
un orifice (318) transversal débouchant dans ledit logement (310) et configuré pour laisser passer un excès de liquide de couplage lors d'un contrôle.

6. Dispositif (300, 500) selon la revendication précédente, dans lequel le corps (302, 502) est formé d'une seule pièce, de préférence en matériau élastiquement déformable.

7. Dispositif (300, 500) selon la revendication précédente, dans lequel le corps (302, 502) a une forme annulaire ou cylindrique, ledit axe étant confondu avec un axe de révolution du corps.

8. Dispositif (500) selon la revendication 7, dans lequel le corps (502) a une forme générale allongée et comprend ledit logement (310) sensiblement en son milieu.

9. Dispositif (500) selon la revendication précédente, dans lequel le corps (502) comporte à ses extrémités longitudinales :
- des crochets (512) de fixation d'un organe élastique (514) configuré pour prendre appui sur ledit capteur (312), et/ou
- des doigts (510) parallèles de positionnement destinés à coopérer avec les pièces fixées par ledit boulon (114).

## Patentansprüche

1. Verfahren zur Überprüfung der Anzugsspannung mindestens eines Befestigungsbolzens (114) mindestens zweier aeronautischer Teile, umfassend die Schritte, die darin bestehen:
a) eine Vorrichtung (300, 500) zum Zentrieren auf einem Kopf (122) einer Schraube (116) des Bolzens (114) zu montierten, wobei diese Vorrichtung zum Zentrieren eine erste Öffnung umfasst, die mit einer Achse der Schraube fluchtet;
b) ein Ende eines Sensors (312) in die Öffnung der Vorrichtung (300, 500) einzuführen, bis dieses Ende in Kontakt mit dem Kopf (122) der Schraube (116) steht;
c) mindestens einen physikalischen Parameter des Bolzens (114) anhand des Sensors (312) zu überprüfen, wobei dieser Parameter repräsentativ für die Anzugsspannung des Bolzens ist; danach
d) die Vorrichtung (300, 500) zum Zentrieren zu entfernen,
wobei das Verfahren zwischen den Schritten a) und b) einen Schritt zum Auftragen einer Koppelflüssigkeit auf den Kopf (122) der Schraube (116) umfasst, **dadurch gekennzeichnet, dass** ein Überschuss an Koppelflüssigkeit durch eine zweite Öffnung (318) der Vorrichtung (300, 500) im Schritt b) ausgebracht wird, wobei die zweite Öffnung quer laufend ist in die erste Öffnung mündet.

2. Verfahren nach Anspruch 1, wobei der Sensor (312) ein Ultraschall-Wandler ist.

3. Verfahren nach einem der vorstehenden Ansprüche, wobei in Schritt b) das Ende des Sensors (312) mit einem vorbestimmten Druck auf den Kopf (122) der Schraube (116), beispielsweise anhand mindestens eines elastischen Organs (514) aufgebracht wird, das an der Vorrichtung (500) fixiert ist und sich am Sensor (312) anlegt.

4. Verfahren nach einem der vorstehenden Ansprüche, wobei die Teile Rotorscheiben (102) eines Flugzeugturbotriebwerks sind, wobei diese Scheiben ringförmige Flansche (104, 106) umfassen, die aneinander angelegt sind, und fluchtende Montageöffnungen (112) für Bolzen (114) umfassen, die nacheinander überprüft werden.

5. Vorrichtung (300, 500) zum Zentrieren zur Umsetzung des Verfahrens nach einem der vorstehenden Ansprüche,
umfassend einen Körper (302, 502), der ein Gehäuse (310) umfasst, das konfiguriert ist, um einen Kopf (122) einerSchraube (116) einesBolzens (114) aufzunehmen, wobei sich dieses Gehäuse (310) entlang einer Achse erstreckt und eine axiale Verlängerung umfasst, die eine Öffnung bildet, die konfiguriert ist, um ein Ende eines Sensors (312) zur Überprüfung der Anzugsspannung dieses Bolzens aufzunehmen, dadurchgekennzeichnet, dass der Körper (302, 502) eine quer laufende (318) Öffnung umfasst, die in das Gehäuse (310) mündet und konfiguriert ist, um einen Überschuss an Koppelflüssigkeit bei einer Überprüfung durchzulassen.

6. Vorrichtung (300, 500) nach dem vorstehenden Anspruch, wobei der Körper (302, 502) aus einem einzigen Teil, vorzugsweise aus einem elastisch verformbaren Werkstoff gebildet ist.

7. Vorrichtung (300, 500) nach dem vorstehenden Anspruch, wobei der Körper (302, 502) eine ringförmige oder zylindrische Form aufweist, wobei die Achse mit einer Rotationsachse des Körpers zusammenfällt.

8. Vorrichtung (500) nach Anspruch 7, wobei der Körper (502) eine allgemeine längliche Form aufweist und das Gehäuse (310) im Wesentlichen in seiner Mitte umfasst.

9. Vorrichtung (500) nach dem vorstehenden Anspruch, wobei der Körper (502) an seinen Längsenden umfasst:
- Haken (512) zum Fixieren eines elastischen Organs (514), das konfiguriert ist, um sich an dem Sensor (312) anzulegen, und/oder
- parallele Finger (510) zum Positionieren, die dazu bestimmt sind, mit den durch den Bolzen (114) fixierten Teilen zusammenzuwirken.

## Claims

1. A method for checking the tightening tension of at least one fastening bolt (114) for fastening at least two aeronautical parts, comprising the steps consisting in:
a) mounting a centring device (300, 500) on a head (122) of a screw (116) of the bolt (114), this centring device comprising a first orifice aligned with an axis of the screw;
b) engaging one end of a sensor (312) in the orifice of the device (300, 500) until that end contacts the head (122) of the screw (116);
c) checking at least one physical parameter of the bolt (114) by means of said sensor (312), this parameter being representative of the tightening tension of the bolt; then
d) removing the centring device (300, 500),
the method comprising, between the steps a) and b), a step of applying a coupling liquid to the head (122) of the screw (116),
**characterized in that** an excess of coupling liquid is evacuated through a second orifice (318) of the device (300, 500) in the step b), said second orifice being transverse and opening into said first orifice.

2. The method of claim 1, wherein the sensor (312) is an ultrasonic transducer.

3. The method according to any of the preceding claims, wherein, in the step b), the end of the sensor (312) is applied with a predetermined pressure to the head (122) of the screw (116), for example by means of at least one elastic member (514) fastened to the device (500) and bearing on said sensor (312).

4. The method according to any of the preceding claims, wherein the parts are rotor discs (102) of an aircraft turbomachine, these discs comprising annular flanges (104, 106) applied to each other and comprising aligned orifices (112) for mounting bolts (114) which are checked one after the other.

5. A centring device (300, 500) for implementing the method according to one of the preceding claims, comprising a body (302, 502) comprising a housing (310) configured to receive a head (122) of a screw (116) of a bolt (114), this housing (310) extending along an axis and comprising an axial extension forming an orifice configured to receive an end of a sensor (312) for the check of the tightening tension of this bolt, **characterised in that** it the body (302, 502) comprises a transverse orifice (318) opening into said housing (310) and configured to allow an excess of coupling liquid to pass through during a check.

6. The device (300, 500) according to the preceding claim, wherein the body (302, 502) is formed in one part, preferably of elastically deformable material.

7. The device (300, 500) according to the preceding claim, wherein the body (302, 502) has an annular or cylindrical shape, said axis being coincident with an axis of revolution of the body.

8. The device (500) of claim 7, wherein the body (502) is generally elongated and comprises said housing (310) substantially in the middle.

9. The device (500) according to the preceding claim, wherein the body (502) comprises at its longitudinal ends:
- hooks (512) for fastening an elastic member (514) configured to bear on said sensor (312), and/or
- parallel locator pins (510) intended to cooperate with the parts fastened by said bolt (114).
